# EUROPÄISCHE PATENTSCHRIFT

(11) **EP 2 765 875 B1**
(45) Veröffentlichungstag und Bekanntmachung des Hinweises auf die Patenterteilung: **30.11.2016**
(21) Anmeldenummer: 12774987.7
(22) Anmeldetag: 28.09.2012
(51) Int. Cl.: A23L 33/20, A23L 13/50, A23L 13/60, A23J 3/00, A23J 3/14

(54) **VERFAHREN ZUR HERSTELLUNG VON FETTREDUZIERTEN LEBENSMITTELN WIE FLEISCH- UND WURSTWAREN**
METHOD FOR PRODUCING REDUCED-FAT FOODS SUCH AS MEAT PRODUCTS AND SAUSAGE PRODUCTS
PROCÉDÉ DE FABRICATION DE PRODUITS ALIMENTAIRES À TENEUR RÉDUITE EN MATIÈRES GRASSES, TELS QUE DES PRODUITS CARNÉS ET DE CHARCUTERIE

(30) Priorität: 10.10.2011 DE 102011115565; 18.06.2012 DE 102012012091; 06.07.2012 DE 102012106092
(43) Veröffentlichungstag der Anmeldung: 20.08.2014
(73) Patentinhaber: DIL Deutsches Institut für Lebensmitteltechnik e.V, 49610 Quakenbrück (DE)
(72) Erfinder: KORTSCHACK, Fritz, 14089 Berlin (DE); HEINZ, Volker, 49610 Quakenbrück (DE); BAJOVIC, Bajo, 49082 Osnabrück (DE)
(74) Vertreter: Kruspig, Volkmar
(86) Internationale Anmeldenummer: PCT/EP2012/069189
(87) Internationale Veröffentlichungsnummer: WO 2013/053607

(56) Entgegenhaltungen:
- WO-A1-2011/107335
- US-A1- 2010 112 187
- TRESPALACIOS ET AL: "Synergistic action of transglutaminase and high pressure on chicken meat and egg gels in absence of phosphates", FOOD CHEMISTRY, ELSEVIER LTD, NL, Bd. 104, Nr. 4, 1. Januar 2007 (2007-01-01), Seiten 1718-1727, XP022095506, ISSN: 0308-8146, DOI: 10.1016/J.FOODCHEM.2007.01.077

## Beschreibung

Die Erfindung betrifft ein Verfahren zur Herstellung von fettreduzierten Fleisch- und Wurstwaren, insbesondere Roh-, Koch- oder Brühwürsten, auf der Basis eines Bräts aus einer zerkleinerten Fleischmenge, gegebenenfalls eines Wasserzusatzes sowie der Zugabe von Salz, Gewürzen, Hilfsstoffen und Zusätzen gemäß Patentanspruch 1.

Im Zusammenhang mit geänderten ernährungsphysiologischen Aspekten besteht ein nach wie vor nicht gedeckter Bedarf an Wurstwaren, wie Rohwürsten, Brühwürsten, Kochwürsten oder Kochstreichwürsten, welche bei hoher Geschmacklichkeit und angenehmem Mundgefühl einen möglichst geringen Fettanteil besitzen.

So enthalten bekannte Brühwürste z.B. ca. 50% Fleisch, 25% Fett und 25% Wasser. Herstellungsseitig werden zunächst Speck und Fleisch vorzerkleinert und anschließend zu einem sogenannten Brät gekuttert. Ein Kutter stellt hierbei ein Gefäß dar, in dem eine Anordnung von Messern mit hoher Geschwindigkeit rotiert. Die Rotation der Messer führt zu einer Zerkleinerung der Zutaten bis hin zu einer breiigen Konsistenz des Bräts. Im Kutter werden durch Zugabe von Kochsalz und/oder Nitritpökelsalz die salzlöslichen Proteine gelöst. Neben der Lösung der Proteine wird durch den Zusatz von Kochsalz oder Nitritpökelsalz ein konservierender Effekt erreicht. Es wird also beim Kuttern angestrebt, möglichst viel fibrilläres Muskeleiweiß in Lösung zu überführen.

Durch die darauffolgende Hitzebehandlung wird das gelöste fibrilläre Muskeleiweiß denaturiert und sorgt somit zur gewünschten Schnittfestigkeit des Endprodukts, bei gekochten Produkten wie z.B. Brühwurst oder Kochwurst.

Durch Zugabe von Fett auf klassischem Wege in den Kutter entsteht bei der Brühwurstherstellung ein Brät. Bei der Brühwurstherstellung ist Fett, neben der geschmackstragenden Wirkung von Bedeutung für die Textur. Am Markt befindliche fettreduzierte Brühwurstwaren enthalten in vielen Fällen Geflügelfleisch oder gering fetthaltiges Fleisch aus verschiedenen Körperteilen von Rind oder Schwein. Derartige bekannte Produkte wirken jedoch trocken, brechen leicht, zeichnen sich häufig durch eine gummiartige Konsistenz aus und haben keinen frischen typischen Wurstgeschmack. Zugaben von Pflanzenölen oder völlige Substitution des Fettes durch auf pflanzlichem Öl basierende Fettersatzstoffe haben mit Blick auf die genannten Nachteile keine im Wesentlichen positiven Ergebnisse erbracht.

Aus der DE 101 06 553 B4 ist ein Verfahren zur Herstellung einer fettreduzierten Brühwurst vorbekannt. Der Schwerpunkt der Herstellung liegt in einem optimierten Kutterprozess, wobei zunächst eine im Wesentlichen fettfreie Fleischmenge ohne Zugabe von Fett gewolft wird. Diese gewolfte Fleischmasse wird dann gekühlt. Ein großer Anteil der gewolften gekühlten Gesamtfleischmasse wird dann im Kutter zerkleinert und unter Zugabe von Gewürzen, Nitritpökelsalz oder dergleichen weiter gekühlt, wobei diesbezüglich Eis hinzugegeben wird. Der verbleibende Anteil der Gesamtfleischmenge wird in angefrorenem Zustand der gewolften Masse zugeführt. Unter Zugabe von gekühltem Wasser erfolgt dann das Auskuttern zu einer Brätmasse mit einer Temperatur von ca. 13° bis 15°C. Im Anschluss kann dann das Abfüllen der Brätmasse in Kunstdärme zu Würsten sowie das Kochen oder Brühen vorgenommen werden.

In US 2010/0112187 A1 wird ein Herstellungsverfahren für Wurst- bzw. Fleischwaren offenbart, welches auf dem Zufügen von fettreduziertem bzw. fettfreiem Soja basiert, sodass es sich hierbei um den Zusatz von pflanzlichen Fetten handelt. Das fettreduzierte Sojaextrakt wird durch eine Hochdruckextraktion mit CO₂ erzeugt.

Aus dem Artikel "Synergistic action of transglutaminase and high pressure on chicken meat and egg gels in absence of phosphates" (Trespalacios et al.) ist es bekannt, dass sowohl ein auf ein Geflügelbrät einwirkender hydrostatischer Hochdruck als auch die Behandlung mit mikrobieller Transglutaminase Einfluss auf ein Geflügelbrät haben.

Aus WO 2011/107335 A1 ist es bekannt, die Produkteigenschaften bei der Herstellung von Lebensmitteln mit Hilfe einer Hochdruckbehandlung zu steuern.

Bekannt ist aus der DE 10 2005 010 836 A1 sowie der DE 10 2005 026 752 A1 das Herstellen einer gekochten Streichleberwurst bzw. einer Rohwurst, wobei im ersteren Fall die Streichleberwurst einen Muskelfleischanteil und einen Leberanteil beinhaltet, wobei der Fettanteil im Muskelfleisch maximal 4% beträgt und außer dem im Muskelfleischanteil enthaltenen Fett kein weiteres Fett zugegeben wird. Im Fall der Herstellung von Rohwurst wird ebenfalls davon ausgegangen, dass der Fettanteil im Muskelfleisch maximal 4% beträgt und dass kein weiteres Fett hinzugeben wird. Das Muskelfleisch kann Schweinefleisch und/oder Rindfleisch enthalten.

Bei dem wurstähnlichen Lebensmittel aus Fleisch, Gemüse und Lupineneiweiß nach DE 101 28 288 A1 wird ebenfalls auf Zugabe auf Fett, Speck oder Öl verzichtet. Das Fleischeiweiß wird durch Lupineneiweiß ersetzt, so dass sich ein Produkt mit nur geringem tierischen Anteil ergibt.

Bei dem Verfahren zur Herstellung eines Fleischprodukts, insbesondere einer Brühwurst, nach EP 0 990 394 B1 liegt der Fettgehalt des fertigen Produkts bei weniger als 0,5 Gew.-%. Um ein derartiges Produkt zu erhalten, wird von einer Fleischrohmasse mit 50 bis 80 Gewichtsteilen magerer Fleischmasse, 15 bis 35 Gewichtsteilen Wasser, 3 bis 7 Gewichtsteilen Ballaststoffen, 1 bis 2 Gewichtsteilen Pökelsalz, 1 bis 5 Gewichtsteilen üblichen Zutaten ausgegangen, wobei die magere Fleischmasse aus 50 bis 100 Gew.-% magerem Fleisch und 0 bis 5 Gew.-% Proteinmasse besteht.

Dieses Gemenge wird gekuttert und mit 0,05 bis 0,2 Gewichtsteilen einer Transaminase versetzt, durchmischt und über einen Zeitraum von bis zu 2 Stunden erhitzt und dann zum fertigen Produkt verpackt.

Es bleibt also aus dem geschilderten Stand der Technik festzuhalten, dass verschiedene Möglichkeiten des Fettaustauschs bzw. der Fettreduzierung vorliegen. Um die sensorische Qualität des Produkts zu gewährleisten, wird beim Einsatz von im Wesentlichen fettfreiem Fleisch das Fett durch den Einsatz von Fettemulsionen Öl in Wasser ersetzt oder es erfolgt ein Zusatz von Fasern und Verdickungsmitteln. Insbesondere am Markt befindliche Rohwurst-Produkte mit fettreduziertem Anteil weisen nur eine unzureichende sensorische Qualität auf. Darüber hinaus weisen die am Markt befindlichen Produkte nur einen minimalen Fettgehalt von ca. 15% auf. Produkte mit einem Fettgehalt von kleiner 10% sind zumindest bisher am Markt nicht verfügbar. Vorhandene Produkte weisen eine sandige Konsistenz und gummiartige Textur auf mit einem unangenehmen Mund- und Verzehrgefühl.

Aus dem Vorgenannten ist es daher Aufgabe der Erfindung, ein weiterentwickeltes Verfahren zur Herstellung von fettreduzierten Fleisch- und Wurstwaren, insbesondere Roh-, Koch- oder Brühwürsten, anzugeben, mit dem es gelingt, ein sensorisch und im Mundgefühl sehr angenehmes Produkt zu schaffen, das darüber hinaus ernährungsphysiologisch unbedenklich ist und mit geringem Aufwand sowie zu akzeptablen Kosten hergestellt werden kann.

Die Lösung der Aufgabe der Erfindung erfolgt verfahrensseitig durch die Lehre nach Patentanspruch 1, wobei die Ansprüche 9 bis 11 auf erfindungsgemäße Endprodukte abzielen.

Es wird demnach von einem Verfahren zu Herstellung von fettreduzierten Fleisch- und Wurstwaren, insbesondere Roh-, Koch- oder Brühwürsten auf der Basis eines Bräts aus einer zerkleinerten Fleischmenge, gegebenenfalls eines Wasserzusatzes sowie der Zugabe von Salz, Gewürzen, Hilfsstoffen und Zusätzen ausgegangen.

Erfindungsgemäß wird dem zum Brät gekutterten Gemenge ein Anteil hochdruckbehandeltes tierisches Gewebe, insbesondere Magerfleisch und/oder hochdruckbehandelte Haut als mindestens teilweiser Fettersatz zugeführt. Durch die Wahl der Parameter (Druck, Zeit, Temperatur) und dem Anteil an hochdruckbehandeltem Rohmaterial, lässt sich die Textur des Endproduktes gezielt steuern. Durch diese Zugabe erhöht sich darüber hinaus der Eiweißanteil im Gemenge und es wird eine Struktur des Produkts in sehr ansprechender Weise erhalten, die denjenigen Waren, die nicht fettreduziert sind, ähnlich ist.

Erfindungsgemäß wird die Hochdruckbehandlung in einem Druckbereich von ca. 50 MPa bis 600 MPa oder größer über einen Zeitraum bis zu mehreren Minuten vorgenommen.

Neben der Verwendung als Fettaustausch, lässt sich das Rohmaterial durch den Zusatz von NPS/oder Kochsalz und/oder den Zusatz von Starterkulturen und/oder GDL, gezielt im pH-Wert senken. Durch nachgelagerte mechanische Belastung oder Behandlung mit hydrostatischem Hochdruck lässt sich eine beschleunigte Wasserabgabe und Abtrocknung erzielen. Dass so gewonnene Rohmaterial lässt sich zur weiteren Herstellung von z.B. Fleischwaren einsetzten.

Die Hochdruckbehandlung der als Fettersatz dienenden Magerfleischmenge, d.h. tierischem Gewebe mit geringem Fettanteil, wird bis zur Eiweißdenaturierung und Produktaufhellung ausgeführt.

Bei einer Ausgestaltung der Erfindung wird dem Brät ein Gemenge, bestehend aus einer hochdruckbehandelten Mischung aus Geflügelfett und/oder Geflügelhaut sowie Magerfleisch zugeführt.

Das eingesetzte Magerfleisch kann vor der Hochdruckbehandlung hydrolytisch, enzymatisch, chemisch und/oder physikalisch in bekannter Weise vorbehandelt werden.

Bei einer weiteren Ausgestaltung der Erfindung wird das gekutterte Brät zur Reduzierung des Salzeinsatzes sowie zur geschmacklichen Hervorhebung eingebrachter Gewürze einer separaten Hochdruckbehandlung unterzogen.

Zum Erhalt eines gewünschten Aufschlusses kann die gegebenenfalls vorzerkleinerte Fleischmenge vor dem Einbringen in den Kutter gekühlt werden.

Das Verfahren zeichnet sich unter Rückgriff auf obige Ausführungen dadurch aus, dass das zu Brät gekutterte Gemenge weitgehend frei von pflanzlichen Fetten oder Ölen oder ölbasierten Fettersatzbestandteilen ist.

Erfindungsgemäß sind darüber hinaus Wurstwaren, hergestellt nach dem erläuterten Verfahren.

Bezogen auf die Gesamtfleischmenge kann der Anteil von hochdruckbehandeltem Magerfleisch bei 10 bis 50 Gew.-% liegen. Das durch die Hochdruckbehandlung aufgehellte Magerfleisch liegt dann im Brät in Stücken vor, so dass sich eine Stückigkeit ähnlich derjenigen ergibt, wie sie bei der Zufuhr von Speck entsteht. Damit bleibt sowohl die Funktion der bisher üblichen Speck- oder Fettzugabe als auch das gewünschte Erscheinungsbild und der sich ergebende Biss beim Verzehr erhalten.

Es hat sich gezeigt, dass ausgehend von eingeführten bekannten Rezepturen das dort zugegebene Fett durch das erfindungsgemäß hochdruckbehandelte Magerfleisch ohne weiteres austauschbar ist. Hieraus ergibt sich der Vorteil der Anhebung des Eiweißanteils in Fleisch- und Wurstwaren. Es können letztendlich fettreduzierte Rohwürste mit Fettgehalten <10% im Erscheinungs- und Anschnittbild dem üblichen Standard entsprechend hergestellt werden.

Auch ist die Produktion von reinen Geflügelprodukten möglich, bei denen der Fettanteil durch hochdruckbehandeltes Geflügelfleisch oder hochdruckbehandelten Geflügelfleischemulsionen ersetzt wird. Der bisher bekannt gewordene Einsatz von Nichtgeflügelfett in solchen Geflügelprodukten kann damit ausgeschlossen werden.

Letztendlich kann auf den Zusatz von Fasern und weiteren Ingredienzien wie z.B. Inulin oder Verdickungsmitteln weitgehend verzichtet werden.

## Patentansprüche

1. Verfahren zur Herstellung von fettreduzierten Lebensmitteln wie Fleisch- und Wurstwaren, insbesondere Roh-, Koch- oder Brühwürsten, auf der Basis eines Bräts aus einer zerkleinerten Fleischmenge, gegebenenfalls eines Wasserzusatzes sowie der Zugabe von Salz, Gewürzen, Hilfsstoffen und Zusätzen,
**dadurch gekennzeichnet, dass**
dem zum Brät gekutterten Gemenge hochdruckbehandeltes tierisches Gewebe, insbesondere Magerfleisch und/oder hochdruckbehandelte Haut als mindestens teilweiser Fettersatz zugeführt wird, so dass der Eiweißanteil im Gemenge steigt, wobei die Hochdruckbehandlung in einem Druckbereich von mindestens ca. 50 MPa bis 600 MPa oder größer über einen Zeitraum bis hin zu mehreren Minuten erfolgt.

2. Verfahren nach Anspruch 1,
**dadurch gekennzeichnet, dass**
die Hochdruckbehandlung von Magerfleisch bis zur Eiweißdenaturierung und Produktaufhellung ausgeführt wird.

3. Verfahren nach Anspruch 1 oder 2,
**dadurch gekennzeichnet, dass**
dem Brät ein Gemenge, bestehend aus einer hochdruckbehandelten Mischung von Geflügelfett und/oder Geflügelhaut und Magerfleisch zugeführt wird.

4. Verfahren nach einem der vorangegangenen Ansprüche,
**dadurch gekennzeichnet, dass**
das Magerfleisch vor der Hochdruckbehandlung hydrolytisch, enzymatisch, chemisch und/oder physikalisch vorbehandelt wird.

5. Verfahren nach einem der vorangegangenen Ansprüche,
**dadurch gekennzeichnet, dass**
das gekutterte Brät zur Reduzierung des Salzeinsatzes einer separaten Hochdruckbehandlung unterzogen wird.

6. Verfahren nach einem der vorangegangenen Ansprüche,
**dadurch gekennzeichnet, dass**
diemit hydrostatischem Druck behandelte Fleischmenge vor dem Einbringen in den Kutter gekühlt/gefroren wird.

7. Verfahren nach einem der vorangegangenen Ansprüche,
**dadurch gekennzeichnet, dass**
das zu Brät gekutterte Gemenge frei von pflanzlichen Fetten oder Ölen oder ölbasierten Fettersatzbestandteilen ist.

8. Verfahren bei dem mit Starterkulturen und/oder GDL unter dem Zusatz von NPS und/oder Kochsalz abgesäuertes Rohmaterial zur beschleunigten Wasserabgabe hydrostatischem Hochdruck und oder mechanischer Belastung ausgesetzt wird, wobei das gewonnene Rohmaterial zur weiteren Herstellung von z.B. Fleischwaren einsetzbar ist.

9. Wurstware, hergestellt nach einem oder mehreren der vorangegangenen Ansprüche.

10. Snack in geometrisch gestalteter Form mit einem hohen Eiweißgehalt tierischen und pflanzlichen Ursprungs, hergestellt nach einem Verfahren nach einem oder mehreren der Ansprüche 1 bis 8.

11. Snack nach Anspruch 10 in Riegel-, Stangen-, Schnecken- oder dergleichen Form.

## Claims

1. A method for producing low-fat foods such as meat and sausage products, in particular raw, cooked, or pre-cooked sausages, based on a sausage meat made of a chopped quantity of meat, optionally a water additive, and the addition of salt, spices, auxiliary ingredients, and additives,
**characterized in that** high-pressure-treated animal tissue, in particular lean meat and/or high-pressure-treated skin is supplied to the mixture chopped to form the sausage meat as an at least partial fat replacement, so that the protein proportion in the mixture increases, wherein the high-pressure treatment is performed in a pressure range of at least approximately 50 MPa to 600 MPa or greater over a period of time of up to several minutes.

2. The method according to Claim 1,
**characterized in that** the high-pressure treatment of lean meat is executed until protein denaturing and product bleaching.

3. The method according to Claim 1 or 2,
**characterized in that** a mixture, consisting of a high-pressure-treated mixture of poultry fat and/or poultry skin and lean meat, is supplied to the sausage meat.

4. The method according to any one of the preceding claims,
**characterized in that** the lean meat is hydrolytically, enzymatically, chemically, and/or physically pretreated before the high-pressure treatment.

5. The method according to any one of the preceding claims,
**characterized in that** the chopped sausage meat is subjected to a separate high-pressure treatment to reduce the salt usage.

6. The method according to any one of the preceding claims,
**characterized in that** quantity of meat treated using hydrostatic pressure is cooled/frozen before the introduction into the chopper.

7. The method according to any one of the preceding claims,
**characterized in that** the mixture chopped into sausage meat is free of vegetable fats or oils or oil-based fat replacement components.

8. A method in which raw material, which is pickled using starter cultures and/or GDL with the use of NPS and/or cooking salt, is subjected to hydrostatic high pressure and/or mechanical load for accelerated water discharge, wherein the obtained raw material is usable for the further production of, for example, meat products.

9. A sausage product, produced according to one or more of the preceding claims.

10. A snack in a geometrically formed shape having a high protein content of animal and vegetable origin, produced according to a method according to one or more of Claims 1 to 8.

11. The snack according to Claim 10 in bar, rod, coil, or similar shape.

## Revendications

1. Procédé pour la fabrication de produits alimentaires à teneur réduite en matière grasse, tels que produits carnés et produits de charcuterie, en particulier saucisson(s) ou saucisse(s) cru(e)s, cuit(e)s ou ébouillanté(e)s, sur la base d'une farce formée d'une quantité de viande hachée, le cas échéant avec apport d'eau et une addition de sel, d'épices, d'agents auxiliaires et d'additifs,
**caractérisé en ce que**
des tissus de provenance animale traités sous haute pression, en particulier des viandes maigres et/ou de la peau traitée sous haute pression sont ajoutés au mélange haché en farce, à titre de substitut de matière grasse au moins partiel, de sorte que la part de protéines dans le mélange augmente, et le traitement sous haute pression a lieu dans une plage de pression d'au moins environ 50 MPa à 600 MPa ou plus, sur une période allant jusqu'à plusieurs minutes.

2. Procédé selon la revendication 1,
**caractérisé en ce que** le traitement sous haute pression des viandes maigres est appliqué jusqu'à dénaturation des protéines et blanchiment du produit.

3. Procédé selon la revendication 1 ou 2,
**caractérisé en ce que** l'on ajoute à la farce un mélange constitué d'un mélange traité sous haute pression de matières grasses de volailles et/ou de peaux de volailles et de viandes maigres.

4. Procédé selon l'une des revendications précédentes,
**caractérisé en ce que** les viandes maigres sont préalablement traitées, avant le traitement sous haute pression, par voie hydrolytique, enzymatique, chimique et/ou physique.

5. Procédé selon l'une des revendications précédentes,
**caractérisé en ce que** la farce hachée est soumise à un traitement sous haute pression séparé afin de réduire l'apport de sel.

6. Procédé selon l'une des revendications précédentes,
**caractérisé en ce que** la masse de viande traitée sous pression hydrostatique est refroidie/congelée avant l'introduction dans le hachoir.

7. Procédé selon l'une des revendications précédentes,
**caractérisé en ce que** le mélange haché pour donner la farce est dépourvu de matière grasse ou d'huile végétale ou de composants succédanés de matière grasse à base d'huile.

8. Procédé dans lequel des matières crues traitées à l'acide au moyen de ferments et/ou de GDL avec addition de NPS et/ou de sel sont exposées à une haute pression hydrostatique ou à une sollicitation mécanique pour accélérer l'évacuation d'eau, et les matières crues ainsi obtenues sont utilisables pour la poursuite de la fabrication, par exemple de produits camés.

9. Produit de charcuterie, fabriqué selon l'une ou plusieurs des revendications précédentes.

10. En-cas sous forme de conception géométrique présentant une forte teneur en protéines d'origine animale et végétale, fabriqué selon un procédé selon l'une ou plusieurs des revendications 1 à 8.

11. En-cas selon la revendication 10, sous forme de bâtonnet, de barreau, d'escargot ou similaires.
